# EUROPEAN PATENT SPECIFICATION

(11) **EP 2 429 223 B1**
(45) Date of publication and mention of the grant of the patent: **24.08.2016**
(21) Application number: 11007499.4
(22) Date of filing: 14.09.2011
(51) Int. Cl.: H04W 8/18, H04W 48/08

(54) **Method of handling manual closed subscriber group selection and related communication device**
Verfahren zur Abwicklung einer manuellen Closed-Subscriber-Group-Auswahl und zugehörige Kommunikationsvorrichtung
Procédé de gestion de sélection manuelle de groupe d'abonnés fermé et dispositif de communication associé

(30) Priority: 14.09.2010 US 382496 P
(43) Date of publication of application: 14.03.2012
(73) Proprietor: HTC Corporation, Taoyuan City 330 (TW)
(72) Inventor: Tiwari, Kundan, Taoyuan City Taoyuan County 330 (TW)
(74) Representative: Schmidbauer, Andreas Konrad

(56) References cited:
- VODAFONE ET AL: "Removal of requirement to inhibit Allowed CSG List", 3GPP DRAFT; S1-102190, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG6, no. Venice, Italy; 20100824, 28 August 2010 (2010-08-28), XP050448126, [retrieved on 2010-08-28]
- QUALCOMM EUROPE: "Updating the allowed CSG list on receiving OMA DM message", 3GPP DRAFT; C1-092119 CSG OMA DM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Sophia Antipolis (France); 20090427, 27 April 2009 (2009-04-27), XP050337651, [retrieved on 2009-04-27]
- QUALCOMM EUROPE: "Storage of allowed CSG identities on USIM", 3GPP DRAFT; C6-080432, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shanghai, China; 20081110, 10 November 2008 (2008-11-10), XP050316087, [retrieved on 2008-11-10]
- TELECOM ITALIA ET AL: "GCF Priority 3 - New TC 6.3.3 Inter-RAT cell reselection / From UTRA_Idle to E- UTRA RRC_IDLE CSG cell", 3GPP DRAFT; 36523-1_CR1014_(REL-9)_R5-105000, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG5, no. Madrid, Spain; 20100823, 10 September 2010 (2010-09-10), XP050457436, [retrieved on 2010-09-10]
- HUAWEI: "CR for manual CSG selection (36.300)", 3GPP DRAFT; R2-091210, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090202, 2 February 2009 (2009-02-02), XP050323310, [retrieved on 2009-02-02]

## Description

### Background of the Invention

### 1. Field of the Invention

The application relates to a method utilized in a wireless communication system and a communication device thereof, and more particularly, to a method of handling manual closed subscriber group selection in a wireless communication system and a related communication device.

### 2. Description of the Prior Art

A network (e.g. Global System for Mobile communications (GSM), Long Term Evolution (LTE), or Universal Mobile Telecommunications System (UMTS)) run by one operator in one country is known as a Public Land Mobile Network (PLMN). The PLMN is identified by a Mobile Network Code (MNC) and Mobile Country Code (MCC) pair. Therefore, a mobile station (MS), also referred as a user equipment (UE), can identify a visited country and a network provider according to the MCC of the PLMN and the MNC of the PLMN respectively. The UE attempts to make contact with the PLMN when the UE is switched on (i.e. power up, flight mode off, or come back from no service area), and searches for a suitable cell of the PLMN to camp on, so as to obtain services provided by the cell.

Moreover, 3GPP defines a closed subscriber group (CSG) which identifies subscribers of an operator who are permitted to access one or more cells of the PLMN but which have restricted access (CSG cells). A CSG cell is accessible by the members of the closed subscriber group with a CSG identity (CSG ID). To facilitate access control, a UE with CSG subscription would have an Allowed CSG List, which contains one or more CSG identities associated with the CSG on which the UE is allowed access. The Allowed CSG List can be modified by the operator, the UE or both. In addition, the UE maintains an operator controlled list of allowed CSG identities (Operator CSG list), which is modified only by the operator. The UE uses the Allowed CSG List and Operator CSG list along with the CSG ID broadcast by the CSG for CSG cell selection and reselection. In CSG cell selection, a manual CSG selection enables a user to select a CSG ID. For the manual CSG selection, the user shall be able to request the UE to perform a scan for available CSGs. When such request is received, the UE shall perform a scan of available CSGs, their CSG identities and their Home Node B (HNB) Names.

In the UE display, the available CSGs shall be represented by their associated HNB Names and PLMN Names. If the HNB Name is not available, the CSG ID shall be displayed instead. On the other hand, a home PLMN (HPLMN) configures, on a PLMN basis, the UE to display the available CSGs either with all CSGs are displayed, or only CSGs in the Operator CSG list are displayed. Note that, the HPLMN is a PLMN whose MCC and MNC of the PLMN identity are the same as the MCC and MNC of the international mobile subscriber identity (IMSI) of the UE. By default, the UE shall display all available CSG ID for any PLMN, unless the UE has been configured by the HPLMN, for a specific PLMN, to display only CSG ID in the Operator CSG list that are available. When the user selects an entry in the list (e.g. Allowed CSG Lists or Operator CSG list), the UE reselects any of the available CSG cells with the CSG ID chosen by the user.

VODAFONE ET AL, "Removal of requirement to inhibit Allowed CSG List", 3GPP DRAFT; S1-102190, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, CT WG6, Venice, Italy; August 24, 2010, *chapter 5.5.4 Manual CSG selection* is representative of the above description of the prior art.

Moreover, attention is drawn to QUALCOMM EUROPE, "Updating the allowed CSG list on receiving OMA DM message", 3GPP DRAFT; C1-092119 CSG OMA DM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Sophia Antipolis (France); April 27, 2009 which mentions that the Allowed CSG list is stored in a USIM or in a non-volatile memory in the ME.

Also, attention is drawn to QUALCOMM EUROPE, "Storage of allowed CSG identities on USIM", 3GPP DRAFT; C6-080432, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Shanghai, China; November 10, 2008.

Based on the abovementioned description, the applicant noticed a problem related to the CSG ID display in manual CSG selection procedure. According to the prior art, a HPLMN may configure a UE per PLMN basis to either show all available CSG IDs or only entries present in the Operator CSG list to the user during the manual CSG selection procedure. However, currently the UE does not have any feature or functionality to handle the configuration per PLMN basis. Thus, the HPLMN has to configure displaying information to the UE in each manual CSG selection. Otherwise, the UE will always display all available CSG ID for every manual CSG selection. This may impact efficiency of the manual CSG selection and cause unnecessary signaling.

In addition, in the manual CSG selection, the UE may scan all frequencies in the supported frequency bands and display a list of found CSG IDs or the corresponding HNB Names if broadcast by the CSG cells. However, in a PLMN (e.g. a Visiting PLMN), if the UE is configured to display CSG IDs present only in the Operator CSG list and the Operator CSG list is empty, the UE still performs scanning for available CSG IDs according to the current specification. This will consume unnecessary battery power of the UE.

### Summary of the Invention

The application discloses a method of handling manual closed subscriber group selection in a wireless communication system and a related communication device in order to solve the abovementioned problems.

According to the present invention, a method of handling manual closed subscriber group (CSG) selection for a mobile device in a wireless communication system is provided as set forth in claim 1. The method comprises storing a public land mobile network (PLMN) basis setting for indicating the mobile device to display all available CSG identities or only CSG identities present in an operator controlled list of allowed CSG identities, in an Universal Subscriber Identity Module (USIM) or a memory of the mobile device, and displaying CSG identities according to the PLMN basis setting during the manual CSG selection.

Another method of handling manual closed subscriber group (CSG) selection for a mobile device in a wireless communication system is also disclosed. The method comprises being configured to display only CSG identities present in an operator controlled list of allowed CSG identities, and prohibiting to perform a frequency scanning in the manual CSG selection when the operator controlled list of allowed CSG identities is empty.

According to the present invention, a mobile device of a wireless communication system for handling manual closed subscriber group (CSG) selection is provided as set forth in claim 5. The mobile device comprises means for storing a public land mobile network (PLMN) basis setting for indicating the mobile device to display all available CSG identities or only CSG identities present in an operator controlled list of allowed CSG identities, in an Universal Subscriber Identity Module (USIM) or a memory of the mobile device, and means for displaying CSG identities according to the PLMN basis setting during the manual CSG selection.

Another mobile device of a wireless communication system for handling manual closed subscriber group (CSG) selection is also disclosed. The mobile device comprises means for being configured to display only CSG identities present in an operator controlled list of allowed CSG identities, and means for prohibiting to perform a frequency scanning in the manual CSG selection when the operator controlled list of allowed CSG identities is empty.

These and other objectives of the present invention will no doubt become obvious to those of ordinary skill in the art after reading the following detailed description of the preferred embodiment that is illustrated in the various figures and drawings.

### Brief Description of the Drawings

Fig. 1 illustrates a schematic diagram of an exemplary wireless communication system.
Fig. 2 illustrates a schematic diagram of an exemplary communication device.
Fig. 3 illustrates a schematic diagram of communication protocol layers for an exemplary communication system.
Fig. 4 is a flowchart of an exemplary process according to the present invention.
Fig. 5 is a flowchart of an exemplary process.

### Detailed Description

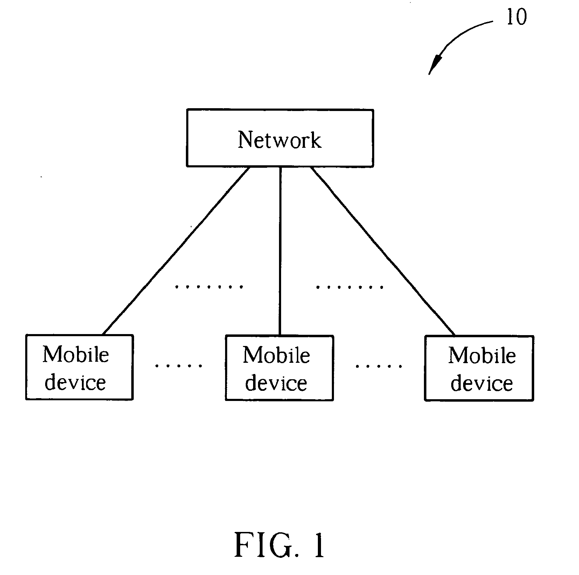

Please refer to Fig. 1, which illustrates a schematic diagram of a wireless communication system 10 according to an example. Briefly, the wireless communication system 10 is composed of a network and a plurality of mobile devices. The wireless communication system 10 can be a Global System for Mobile communications (GSM), Long Term Evolution (LTE) system, Universal Mobile Telecommunications System (UMTS), or any other similar network system. In the UMTS system, the network can be referred as a Universal Terrestrial Radio Access Network (UTRAN) comprising a plurality of base stations (Node Bs) and Radio Network Controllers (RNCs), whereas the mobile devices are referred as to user equipments (UEs). The UEs can be devices such as mobile phones, computer systems, etc. This terminology will be used throughout the application for ease of reference. However, this should not be construed as limiting the disclosure to any one particular type of network. In some examples, the network and the UE may be seen as a transmitter or receiver according to transmission direction, e.g., for uplink (UL), the UE is the transmitter and the network is the receiver, and for downlink (DL), the network is the transmitter and the UE is the receiver.

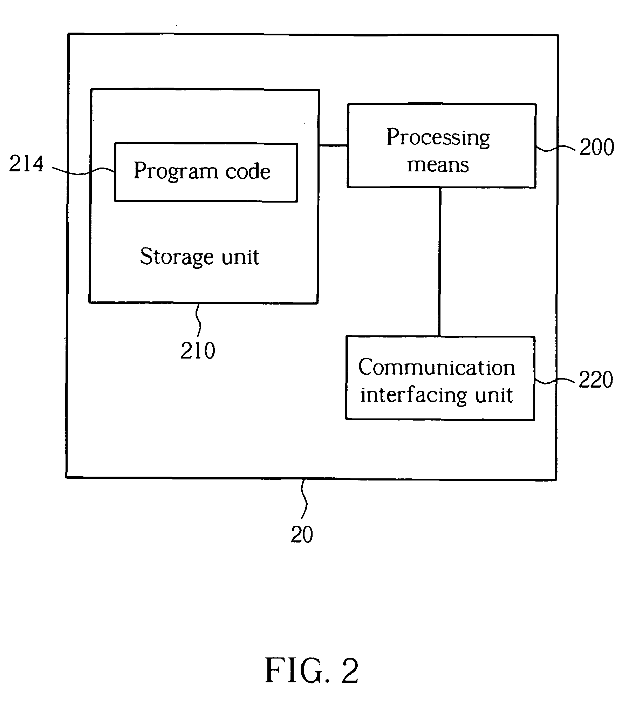

Fig. 2 illustrates a schematic diagram of an exemplary communication device 20. The communication device 20 can be the mobile device shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that can store program code 214, for access by the processing means 200. Examples of the storage unit 210 include but are not limited to a subscriber identity module (SIM)/universal subscriber identity module (USIM), read-only memory (ROM), flash memory, random-access memory (RAM), CD-ROMs, magnetic tape, hard disk, and optical data storage device. The communication interfacing unit 220 is preferably a radio transceiver and can exchange wireless signals with the network according to processing results of the processing means 200.

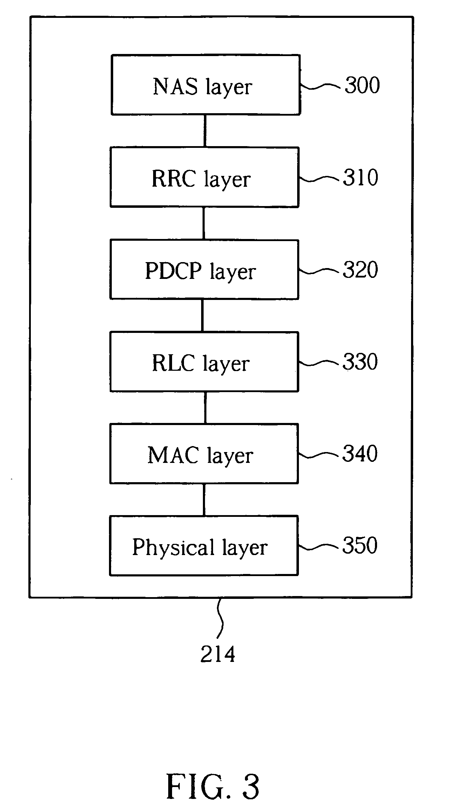

Please refer to Fig. 3, which illustrates a schematic diagram of the program code 214 for the LTE system according to an example. The program code 214 includes program code of multiple communications protocol layers, which from top to bottom are a non-access stratum (NAS) layer 300, a radio resource control (RRC) layer 310, a packet data convergence protocol (PDCP) layer 320, a radio link control (RLC) layer 330, a medium access control (MAC) layer 340 and a physical (PHY) layer 350. The NAS layer 300 is responsible for Public Land Mobile Network (PLMN) selection, tracking area update, paging, authentication and Evolved Packet System (EPS) bearer establishment, modification and release. In addition, the NAS layer 300 may instruct an AS layer to scan all the frequencies supported by the UE.

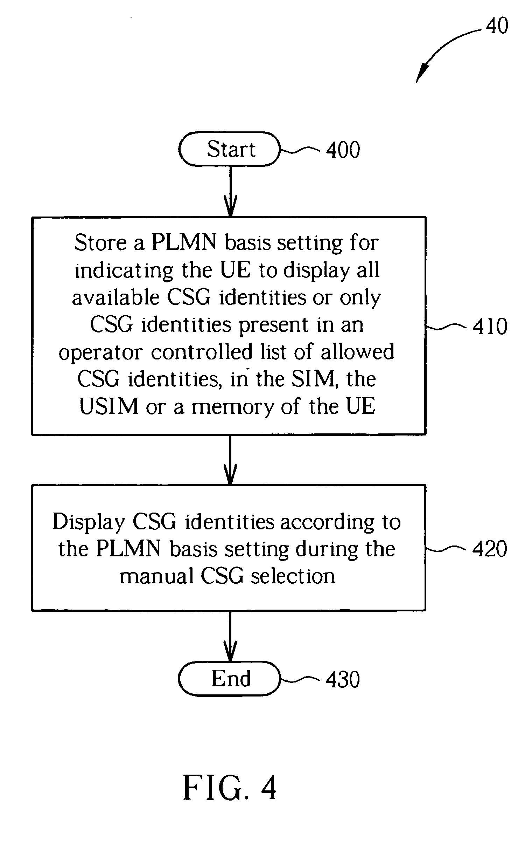

Please refer to Fig. 4, which illustrates a flowchart of an exemplary process 40. The process 40 is utilized in an UE (as the mobile device of Fig. 1) for handling manual closed subscriber group (CSG) selection procedure. The process 40 can be compiled into the program code 214 and includes the following steps:
Step 400: Start.
Step 410: Store a PLMN basis setting for indicating the UE to display all available CSG identities or only CSG identities present in an operator controlled list of allowed CSG identities, in the SIM, the USIM or a memory of the UE.
Step 420: Display CSG identities according to the PLMN basis setting during the manual CSG selection.
Step 430: End.

According to the process 40, the SIM/USIM card or the UE memory (e.g. storage unit 210) stores information per PLMN basis configured by a Home PLMN (HPLMN), for indicating the UE to display all available CSG identities or only CSG identities present in the operator controlled list of allowed CSG identities (hereafter called the Operator CSG list). Therefore, the UE reads the CSG displaying information from the SIM/USIM or UE memory about the configuration for each PLMN during the manual CSG selection, and then displays CSG IDs according to the configuration read from the USIM. Therefore, the HPLMN does not need to configure CSG displaying information in each manual CSG selection, and thereby the UE does not display all CSG identities for each PLMN. For example, the HPLMN configures the PLMN basis setting in a manual CSG selection, and in the next manual CSG selection the UE automatically reads the PLMN basis setting from it's memory/SIM/USIM for CSG identities displaying.

In detail, a new elementary file is defined in the SIM/USIM or UE memory for storing the setting per PLMN basis, to allow the UE to show all available CSG identities or only CSG identities present in the Operator CSG list. The HPLMN configures this elementary file per PLMN basis. In addition, read permission to elementary file is based on a personal identification number (PIN) verification. Note that, the user cannot modify the content of the elementary file. However, the HPLMN can send an over-the-air (OTA) message (e.g. SMS) to modify the elementary file. Or, a new field is added for each entry (e.g. each PLMN basis) in an existing elementary file in SIM/USIM or UE memory, which indicates if display of all available CSG identities are allowed or only preset in the Operator CSG list. The HPLMN can modify this field through OTA message.

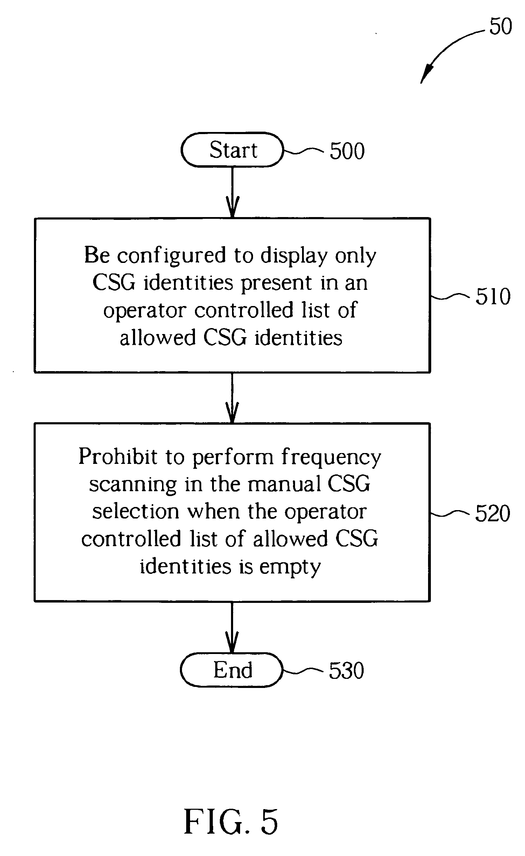

Please refer to Fig. 5, which illustrates a flowchart of an exemplary process 50. The process 50 is utilized in an UE (as the mobile device of Fig. 1) for handling manual closed subscriber group (CSG) selection procedure. The process 50 can be compiled into the program code 214 and includes the following steps:
Step 500: Start.
Step 510: Be configured to display only CSG identities present in an operator controlled list of allowed CSG identities.
Step 520: Prohibit to perform frequency scanning in the manual CSG selection when the operator controlled list of allowed CSG identities is empty.
Step 530: End.

According to the process 50, if the HPLMN configures the UE to show only CSG identities present in the Operator CSG list and the Operator CSG list is empty, then the UE is prohibited to perform frequency scanning for available CSG identities in the manual CSG selection procedure. For example, the NAS layer dose not instruct the AS layer to scan all the frequencies supported by the UE, thereby the power consumption can be reduced. In addition, the UE may display the empty list to the user or shows error message.

Please note that, the abovementioned steps of the processes including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20.

In conclusion, the exemplary examples and means are provided for handling manual CSG selection for the UE, so as to avoid unnecessary signaling for CSG identities displaying, and unnecessary power consumption.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling manual closed subscriber group, CSG, selection for a mobile device (20) in a wireless communication system (10), the method comprising:
storing (410) a public land mobile network, PLMN, basis setting for indicating the mobile device (20) to display all available CSG identities or only CSG identities present in an operator controlled list of allowed CSG identities, in an Subscriber Identity Module, SIM, an Universal Subscriber Identity Module, USIM, or a memory of the mobile device (20); and
displaying (420) CSG identities according to the PLMN basis setting during the manual CSG selection.

2. The method of claim 1, wherein the PLMN basis setting is configured by a home PLMN, whose Mobile Country Code, MCC, and Mobile Network Code, MNC, are the same as the MCC and MNC of an international mobile subscriber identity, IMSI, of the mobile device (20).

3. The method of claim 1, wherein said storing step (410) comprises:
storing the PLMN basis setting in an elementary file created in the USIM or the memory of the mobile device (20); or
storing the PLMN basis setting in a field created in an existing elementary file in the USIM or the memory of the mobile device (20).

4. The method of claim 3, further comprising:
reading the elementary file from the USIM with a Personal Identification Number, PIN, verification provided by the operator.

5. A mobile device (20) of a wireless communication system (10) for handling manual closed subscriber group, CSG, selection, the mobile device (20) comprising:
means for storing a public land mobile network, PLMN, basis setting for indicating the mobile device (20) to display all available CSG identities or only CSG identities present in an operator controlled list of allowed CSG identities, in a Subscriber Identity Module, SIM, an Universal Subscriber Identity Module, USIM, or a memory of the mobile device (20); and
means for displaying CSG identities according to the PLMN basis setting during the manual CSG selection.

6. The mobile device of claim 5, wherein the PLMN basis setting is configured by a home PLMN, whose Mobile Country Code, MCC, and Mobile Network Code, MNC, are the same as the MCC and MNC of an international mobile subscriber identity, IMSI, of the mobile device (20).

7. The mobile device of claim 5, wherein the means for storing comprises:
means for storing the PLMN basis setting in an elementary file created in the USIM or the memory of the mobile device (20); or
means for storing the PLMN basis setting in a field created in an existing elementary file in the USIM or the memory of the mobile device (20).

8. The mobile device of claim 7, further comprising:
means for reading the elementary file from the USIM with a Personal Identification Number, PIN, verification provided by the operator.

## Patentansprüche

1. Ein Verfahren zum Handhaben einer manuellen Auswahl einer geschlossenen Teilnehmergruppe bzw. einer manuellen CSG-Auswahl (CSG = closed subscriber group) für eine Mobileinrichtung (20) in einem Drahtloskommunikationssystem (10), wobei das Verfahren Folgendes aufweist:
Speichern (410) einer Basiseinstellung eines öffentlichen, terrestrischen Mobilfunknetzwerks bzw. PLMN-Basiseinstellung (PLMN = public land mobile network), um der Mobileinrichtung (20) anzuzeigen, dass alle verfügbaren CSG-Identitäten angezeigt werden sollen oder nur CSG-Identitäten, die in einer vom Betreiber gesteuerten Liste von zulässigen CSG-Identitäten vorliegen, in einem Teilnehmeridentitätsmodul bzw. SIM (SIM = Subscriber Identity Module), einem universellen Teilnehmeridentitätsmodul bzw. USIM (USIM = Universal Subscriber Identity Module) oder einem Speicher der Mobileinrichtung (20); und
Anzeigen (420) von CSG-Identitäten gemäß der PLMN-Basiseinstellung während der manuellen CSG-Auswahl.

2. Verfahren nach Anspruch 1, wobei die PLMN-Basiseinstellung konfiguriert wird durch ein Heim-PLMN, dessen Mobilfunkländervorwahl bzw. MCC (MCC = Mobile Country Code) und Mobilfunknetzwerkcode bzw. MNC (MNC = Mobile Network Code) die gleichen sind wie die MCC und der MNC einer internationalen Mobilfunkteilnehmeridentität bzw. IMSI (IMSI = international mobile subscriber identity) der Mobileinrichtung (20).

3. Verfahren nach Anspruch 1, wobei der Speicherschritt (410) Folgendes aufweist:
Speichern der PLMN-Basiseinstellung in einer elementaren Datei, die in dem USIM oder dem Speicher der Mobileinrichtung (20) erzeugt wird; oder
Speichern der PLMN-Basiseinstellung in einem Feld, das in einer vorhandenen elementaren Datei in dem USIM oder dem Speicher der Mobileinrichtung (20) erzeugt wird.

4. Verfahren nach Anspruch 3, das weiter Folgendes aufweist:
Lesen der elementaren Datei aus der USIM mit einer PIN-Verifikation (PIN = Personal Identification Number bzw. persönliche Identifikationsnummer), die durch den Betreiber vorgesehen wird.

5. Eine Mobileinrichtung (20) eines Drahtloskommunikationssystems (10) zum Handhaben einer manuellen Auswahl einer geschlossenen Teilnehmergruppe bzw. einer manuellen CSG-Auswahl (CSG = closed subscriber group), wobei die Mobileinrichtung (20) Folgendes aufweist:
Mittel zum Speichern einer Basiseinstellung eines öffentlichen, terrestrischen Mobilfunknetzwerks bzw. einer PLMN-Basiseinstellung (PLMN = public land mobile network), um der Mobileinrichtung (20) anzuzeigen, dass alle verfügbaren CSG-Identitäten angezeigt werden sollen oder nur CSG-Identitäten, die in einer vom Betreiber gesteuerten Liste von zulässigen CSG-Identitäten vorliegen, in einem Teilnehmeridentitätsmodul bzw. SIM (SIM = Subscriber Identity Module), einem universellen Teilnehmeridentitätsmodul bzw. USIM (USIM = Universal Subscriber Identity Module) oder einem Speicher der Mobileinrichtung (20); und
Mittel zum Anzeigen von CSG-Identitäten gemäß der PLMN-Basiseinstellung während der manuellen CSG-Auswahl.

6. Mobileinrichtung nach Anspruch 5, wobei die PLMN-Basiseinstellung konfiguriert wird durch ein Heim-PLMN, dessen Mobilfunkländervorwahl bzw. MCC (MCC = Mobile Country Code) und Mobilfunknetzwerkcode bzw. MNC (MNC = Mobile Network Code) die gleichen sind wie die MCC und der MNC einer internationalen Mobilfunkteilnehmeridentität bzw. IMSI (IMSI = international mobile subscriber identity) der Mobileinrichtung (20).

7. Mobileinrichtung nach Anspruch 5, wobei die Mittel zum Speichern Folgendes aufweisen:
Mittel zum Speichern der PLMN-Basiseinstellung in einer elementaren Datei, die in dem USIM oder dem Speicher der Mobileinrichtung (20) erzeugt wird; oder
Mittel zum Speichern der PLMN-Basiseinstellung in einem Feld, das in einer existierenden elementaren Datei in dem USIM oder dem Speicher der Mobileinrichtung (20) erzeugt wird.

8. Mobileinrichtung nach Anspruch 7, das weiter Folgendes aufweist:
Mittel zum Lesen der elementaren Datei aus dem USIM mit einer PIN-Verifikation (PIN = Personal Identification Number bzw. persönliche Identifikationsnummer), die durch den Betreiber vorgesehen wird.

## Revendications

1. Procédé pour gérer une sélection manuelle de groupe d'abonnés fermé, CSG, pour un dispositif mobile (20) dans un système de communication sans fil (10), le procédé comprenant :
mémoriser (410) un paramétrage de base d'un réseau mobile terrestre public, PLMN, pour indiquer au dispositif mobile (20) d'afficher toutes les identités CSG disponibles ou seulement les identités CSG présentes dans une liste d'identités CSGautorisées contrôlée par un opérateur, dans un Module d'Identité d'Abonné, SIM, un Module d'Identité d'Abonné Universel, USIM, ou une mémoire du dispositif mobile (20) ; et
afficher (420) des identités CSG conformément au paramétrage de base PLMN pendant la sélection CSG manuelle.

2. Procédé selon la revendication 1, dans lequel le paramétrage de base PLMN est configuré par un PLMN de domicile, dont le Code de Pays pour les Mobiles, MCC, et le Code de Réseau Mobile, MNC, sont les mêmes que le MCC et le MNC d'une identité d'abonné mobile international, IMSI, du dispositif mobile (20).

3. Procédé selon la revendication 1, dans lequel l'étape de mémorisation (410) comprend :
mémoriser le paramétrage de base PLMN dans un fichier élémentaire créé dans l'USIM ou dans la mémoire du dispositif mobile (20) ; ou
mémoriser le paramétrage de base PLMN dans un champ créé dans un fichier élémentaire existant dans l'USIM ou dans la mémoire du dispositif mobile (20).

4. Procédé selon la revendication 3, comprenant en outre :
lire le fichier élémentaire dans l'USIM avec une vérification de Numéro d'Identification Personnel, PIN, assurée par l'opérateur.

5. Dispositif mobile (20) d'un système de communication sans fil (10) pour gérer une sélection manuelle de groupe d'abonnés fermé, CSG, le dispositif mobile (20) comprenant :
des moyens pour mémoriser un paramétrage de base d'un réseau mobile terrestre public, PLMN, pour indiquer au dispositif mobile (20) d'afficher toutes les identités CSG disponibles ou seulement les identités CSG présentes dans une liste d'identités CSGautorisées contrôlée par un opérateur, dans un Module d'Identité d'Abonné, SIM, un Module d'Identité d'Abonné Universel, USIM, ou une mémoire du dispositif mobile (20) ; et
des moyens pour afficher des identités CSG conformément au paramétrage de base PLMN pendant la sélection CSG manuelle.

6. Dispositif mobile selon la revendication 5, dans lequel le paramétrage de base PLMN est configuré par un PLMN de domicile, dont le Code de Pays pour les Mobiles, MCC, et le Code de Réseau Mobile, MNC, sont les mêmes que le MCC et le MNC d'une identité d'abonné mobile international, IMSI, du dispositif mobile (20).

7. Dispositif mobile selon la revendication 5, dans lequel les moyens pour mémoriser comprennent :
des moyens pour mémoriser le paramétrage de base PLMN dans un fichier élémentaire créé dans l'USIM ou dans la mémoire du dispositif mobile (20) ; ou
des moyens pour mémoriser le paramétrage de base PLMN dans un champ créé dans un fichier élémentaire existant dans l'USIM ou dans la mémoire du dispositif mobile (20).

8. Dispositif mobile selon la revendication 7, comprenant en outre :
des moyens pour lire le fichier élémentaire dans l'USIM avec une vérification de Numéro d'Identification Personnel, PIN, assurée par l'opérateur.
